# DEMANDE DE BREVET EUROPEEN

(11) **EP 1 987 993 A1**
(43) Date de publication de la demande: **05.11.2008**
(21) Numéro de dépôt: 08305125.0
(22) Date de dépôt: 25.04.2008
(51) Int. Cl.: B60T 11/26, B60R 16/08

(54) **Dispositif d'alimentation en fluide hydraulique pour véhicule automobile comportant un réservoir déporté et grillé d'auvent associée**

(30) Priorité: 03.05.2007 FR 0754843
(71) Demandeur: Peugeot Citroën Automobiles SA, 78140 Vélizy Villacoublay (FR)
(72) Inventeur: Fiorini, Nelson, 95240 Cormeilles en Parisis (FR); Boulet, Emmanuel, 93160 Noisy Le Grand (FR)

(57) **Abrégé**

L'invention se rapporte à un dispositif d'alimentation en fluide hydraulique pour un circuit d'utilisation (20) de fluide d'un véhicule à moteur, tel qu'un circuit de freinage, le dispositif comprenant un réservoir (10) de remplissage unique, déporté du circuit d'utilisation (20) et disposé à proximité du capot moteur du véhicule, le réservoir (10) unique alimentant le circuit d'utilisation (20) au moyen de deux canalisations flexibles (21, 22).

## Description

La présente invention est relative à un dispositif d'alimentation en fluide hydraulique pour un circuit d'utilisation de fluide d'un véhicule à moteur, tel qu'un circuit de freinage, ainsi qu'à une grille d'auvent. De tels dispositifs sont utiles pour alimenter les circuits de freinage, de commande de l'embrayage, d'assistance à la direction ou de suspension. Toutefois, les circuits de freinage posent des problèmes de sécurité spécifiques.

Il est connu, notamment par la demande de brevet n° FR 2 813 261, un dispositif d'alimentation en fluide hydraulique d'un circuit de freinage comprenant un premier réservoir présentant un orifice de remplissage, disposé au dessous du capot moteur, et un deuxième réservoir, connecté au premier par un tuyau flexible unique et positionné directement sur le maître cylindre du circuit de freinage. Ainsi, le premier réservoir, beaucoup plus accessible, sert de réservoir de remplissage et d'alimentation du deuxième réservoir qui alimente à son tour le circuit de freinage.

L'invention propose de tirer parti des avantages d'un réservoir déporté, tout en réduisant le coût et en simplifiant le montage d'un tel dispositif. Dans ce but, l'invention est essentiellement caractérisée en ce que le dispositif comporte un réservoir unique.

Ainsi, l'invention concerne un dispositif d'alimentation en fluide hydraulique pour un circuit d'utilisation de fluide d'un véhicule à moteur, tel qu'un circuit de freinage, le dispositif comprenant un réservoir de remplissage unique, déporté du circuit d'utilisation et disposé à proximité du capot moteur du véhicule, le réservoir unique alimentant le circuit d'utilisation au moyen de deux canalisations flexibles.

Dans une réalisation, le réservoir est intégré à une pièce dite grille d'auvent, située à l'arrière du capot moteur, à la base du pare-brise.

Dans une réalisation, le réservoir est moulé directement avec la grille d'auvent.

Dans une réalisation, les canalisations, sont raccordées à l'une de leurs extrémités au réservoir grâce à deux embouts respectifs, disposés dans le fond du réservoir, lesdits embouts, étant moulés directement avec la grille d'auvent.

Dans une réalisation, le réservoir est un réservoir de liquide de frein déporté du maître-cylindre.

L'invention concerne également une grille d'auvent de véhicule, notamment de véhicule automobile, formé par un procédé de moulage d'une matière plastique, comprenant un réservoir, le réservoir étant moulé directement avec la grille d'auvent.

Dans une réalisation, la grille d'auvent comprend au moins un embout de branchement d'une canalisation, disposé dans le fond du réservoir, ledit embout étant moulé directement avec la grille d'auvent.

Dans une réalisation, le réservoir est disposé à proximité d'un des bords extérieurs de la grille d'auvent.

Dans une réalisation, le réservoir est un réservoir de liquide de frein destiné à alimenter en fluide hydraulique un circuit de freinage.

D'autres caractéristiques et avantages de l'invention apparaîtront à la lecture de la description faite ci-dessous, cette dernière étant effectuée à titre descriptif et non limitatif en faisant référence aux figures ci-après sur lesquelles:
- la figure 1 représente un dispositif de l'art antérieur, comportant deux réservoirs,
- la figure 2 représente un mode de réalisation du dispositif selon l'invention,
- la figure 3 représente une partie de grille d'auvent conforme à l'invention.

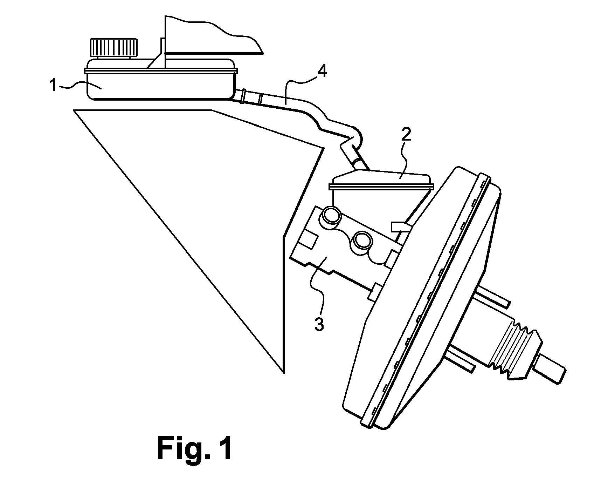

La figure 1 représente un dispositif connu, utilisant deux réservoirs 1, 2 séparés. Le premier réservoir 1 est déporté à proximité du capot moteur tandis que le second réservoir 2 est fixé sur un maître cylindre 3. Les deux réservoirs sont mis en communication par un tuyau flexible 4.

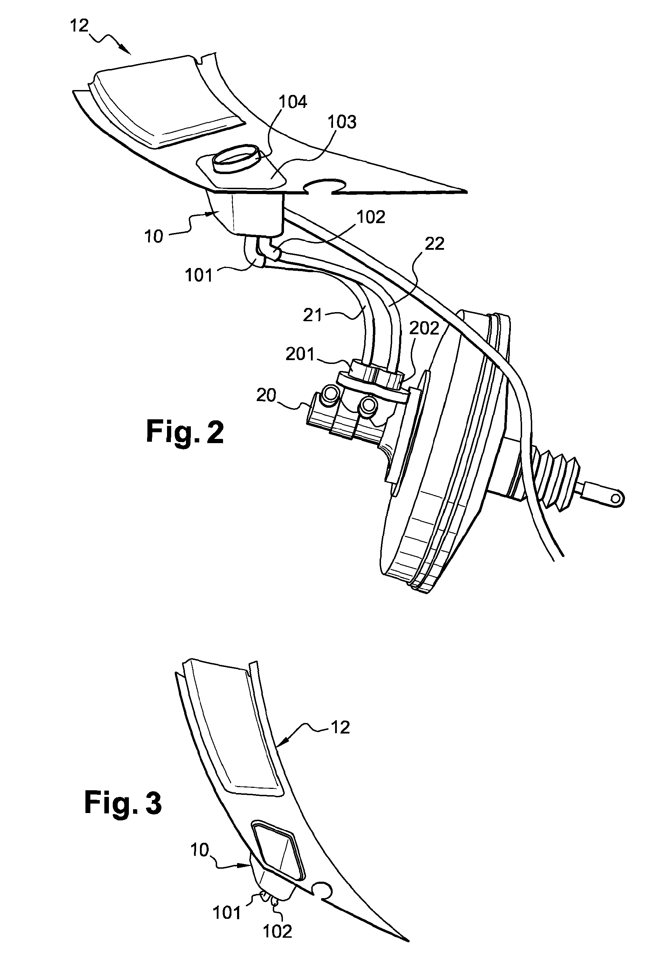

La figure 2 représente un dispositif conforme à l'invention, comprenant un réservoir 10 unique, qui assure simultanément les fonctions de réservoir de remplissage et de réservoir d'alimentation. Le réservoir 10 communique directement avec le maître cylindre 20, grâce à deux canalisations souples 21 et 22, qui sont par exemple des durits de type connu. Les canalisations 21 et 22 sont raccordées à l'une de leurs extrémités au réservoir 10 grâce à deux embouts respectifs 101 et 102 disposés dans le fond du réservoir, et sont raccordées à leur autre extrémité au maître cylindre 20, grâce à deux embouts 201 et 202 disposés sur ce dernier.

Selon un autre aspect de l'invention, le réservoir 10 est intégré à la grille d'auvent 12, structure située à l'arrière du capot moteur, à la base du pare-brise. De manière connue, la grille d'auvent permet l'évacuation d'eau, sert de guide d'air pour l'habitacle, et supporte notamment le système d'essuie-vitre. Un avantage immédiat de cette intégration du réservoir 10 dans la grille d'auvent est l'accessibilité du réservoir pour l'utilisateur qui souhaite contrôler le niveau du fluide dans le réservoir, ou le remplir. Un deuxième avantage est que le réservoir 10 est moulé directement avec la grille d'auvent 12, comme représenté sur la figure 3. La figure 3 représente en effet une grille d'auvent telle qu'elle est fabriquée conformément à l'invention : elle comprend une cavité de forme sensiblement parallélépipédique, qui forme le réservoir 10. Les embouts 101 et 102, situés sur la partie inférieure du réservoir 10, sont également moulés avec l'ensemble. Le réservoir est disposé à proximité d'un des bords extérieurs de la grille d'auvent 12, afin d'être accessible depuis le côté du véhicule. En pratique, la grille d'auvent 12 comporte un deuxième réservoir (non représenté), identique au réservoir 10, et disposé à proximité de l'autre extrémité de la grille d'auvent. Ainsi, chaque réservoir alimente respectivement le circuit de freinage d'une des roues avant.

En moulant le réservoir 10 directement dans la grille d'auvent 12 on simplifie non seulement la fabrication du réservoir, mais également son montage puisqu'il ne s'agit plus, comme dans l'art antérieur, d'une pièce rapportée. En effet, pour finaliser l'assemblage du réservoir, il suffit d'ajouter une plaque ou trappe de fermeture 103, cette trappe étant pourvue d'un bouchon 104 de remplissage.

Ainsi, l'invention permet des économies importantes sur le coût des circuits hydrauliques, car elle permet d'utiliser un réservoir unique, facilement accessible à l'utilisateur. De plus, ce réservoir peut être intégré directement par moulage à la grille d'auvent, ce qui simplifie grandement le montage du réservoir

## Revendications

1. Dispositif d'alimentation en fluide hydraulique pour un circuit d'utilisation (20) de fluide d'un véhicule à moteur, tel qu'un circuit de freinage, le dispositif comprenant un réservoir (10) de remplissage unique, déporté du circuit d'utilisation (20) et disposé à proximité du capot moteur du véhicule, le réservoir (10) unique alimentant le circuit d'utilisation (20) au moyen de deux canalisations flexibles (21, 22), le réservoir (10) étant moulé et intégré directement dans une pièce dite grille d'auvent (12), située à l'arrière du capot moteur, à la base du pare-brise.

2. Dispositif selon la revendication 3, **caractérisé en ce que** les canalisations (21, 22) sont raccordées à l'une de leurs extrémités au réservoir (10) grâce à deux embouts respectifs (101, 102) disposés dans le fond du réservoir (10), lesdits embouts (101, 102) étant moulés directement avec la grille d'auvent (12).

3. Dispositif selon la revendication 1 ou 2, **caractérisé en ce que** le réservoir (10) est un réservoir de liquide de frein déporté du maître-cylindre (20).

4. Grille d'auvent (12) de véhicule, notamment de véhicule automobile, formé par un procédé de moulage d'une matière plastique, **caractérisée en ce qu'**elle comprend un réservoir (10) moulé directement avec la grille d'auvent (12), le réservoir (10) étant un réservoir de remplissage d'un dispositif d'alimentation selon l'une des revendications 1 à 3.

5. Grille d'auvent selon la revendication 4, **caractérisée en ce que** le réservoir (10) est disposé à proximité d'un des bords extérieurs de la grille d'auvent (12).
